# EUROPEAN PATENT APPLICATION

(11) **EP 1 447 764 A2**
(43) Date of publication of application: **18.08.2004**
(21) Application number: 04001735.2
(22) Date of filing: 27.01.2004
(51) Int. Cl.: G06F 17/60, G06F 17/30

(54) **System, method and computer program for generating document contents and for distribution of documents to recipients by using data mappings**

(30) Priority: 12.02.2003 US 365206
(71) Applicant: MICROSOFT CORPORATION, Redmond, WA 98052 (US)
(72) Inventor: Pawlowski, Lukasz, Seattle Washington 98104 (US); Carlson, Jason, Redmond Washington 98052 (US); Welcker, Brian Lee, Seattle Washington 98119 (US)
(74) Representative: Grünecker, Kinkeldey, Stockmair & Schwanhäusser Anwaltssozietät

(57) **Abstract**

Data-driven delivery enables reports to be executed and delivered to a list of recipients, determined at runtime. The data-driven delivery is exposed to users as a type of subscription. For data-driven delivery, a list of recipients is retrieved based on a query specified by an administrator, for example. For each recipient (240,250,260), an optional set of fields is also retrieved, giving the administrator the ability to customize the content of the report for each recipient by mapping the fields returned by the query to report parameters or delivery extension settings. The report is delivered to each recipient (240,250,260) using a delivery mechanism (205) specified in the results of the query or when the data-driven subscription is created.

## Description

### FIELD OF THE INVENTION

This invention relates in general to the field of information systems. More particularly, this invention relates to the customized delivery of data.

### BACKGROUND OF THE INVENTION

As the number of information workers continue to grow, workers will increasingly desire the precise information they need to get their job done distributed to them. The current solutions for retrieving customized information, searching or manually accessing data, are time consuming and inefficient processes. Many information systems must distribute relevant information to the appropriate recipients, and choose and configure a distribution channel that enables each recipient to receive information in an optimal way. It is not only desirable to carefully select the recipients of a communication, but it is also desirable to customize the information received by each recipient.

Conventional approaches fall into several categories. Some conventional approaches broadcast documents such that all recipients receive the same document. In such a case, there is a common distribution list functionality. Other conventional approaches broadcast a subset of documents. In other words, all the recipients choose which documents they want to receive from a list of possible documents. Each recipient then receives just those documents that they have chosen.

Accordingly, there is a need for information systems to distribute relevant information to the appropriate recipients (without overloading any recipients), and choose and configure a distribution channel that enables each recipient to receive information in an optimal or desirable manner.

### SUMMARY OF THE INVENTION

The present invention is directed to distributing relevant information by using knowledge about a recipient, knowledge about the information the recipient desires, and knowledge about how to distribute the information to the recipient, retrieved or determined responsive to a single query, resulting in customized content for each recipient.

According to aspects of the invention, the contents of a document sent to a recipient are customized using settings dynamically retrieved from a data source. Furthermore, the document can be distributed to each recipient using settings dynamically retrieved from a data source.

Additionally, according to further aspects of the invention, the amount of information distributed to each recipient can be limited by dynamically retrieving and customizing both the contents of the document and the distribution channel for each recipient.

Additional features and advantages of the invention will be made apparent from the following detailed description of illustrative embodiments that proceeds with reference to the accompanying drawings.

### BRIEF DESCRIPTION OF THE DRAWINGS

The foregoing summary, as well as the following detailed description of preferred embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:
Figure 1 is a block diagram showing an exemplary computing environment in which aspects of the invention may be implemented;
Figure 2 is a high level diagram useful in explaining aspects of the present invention;
Figure 3 is a block diagram of an exemplary report server in accordance with the present invention;
Figure 4 is a flow diagram of exemplary data-driven subscription in accordance with the present invention; and
Figure 5 is a flow diagram of another exemplary method of data-driven subscription in accordance with the present invention.

### DETAILED DESCRIPTION OF PREFERRED EMBODIMENTS

### Overview

Reports are documents assembled from data source(s) using a pre-defined query and layout definition. Data-driven delivery enables reports to be executed and delivered to a list of recipients, preferably determined at runtime. The data-driven delivery is exposed to users as a type of subscription. For data-driven delivery, a list of recipients is retrieved based on a query specified by an administrator, for example. For each recipient, an optional set of fields is also retrieved, giving the administrator the ability to customize the content of the report for each recipient by mapping the fields returned by the query to report parameters or delivery settings. The report is delivered to each recipient using a delivery mechanism specified in the results of the query or when the data-driven subscription was created.

### Exemplary Computing Environment

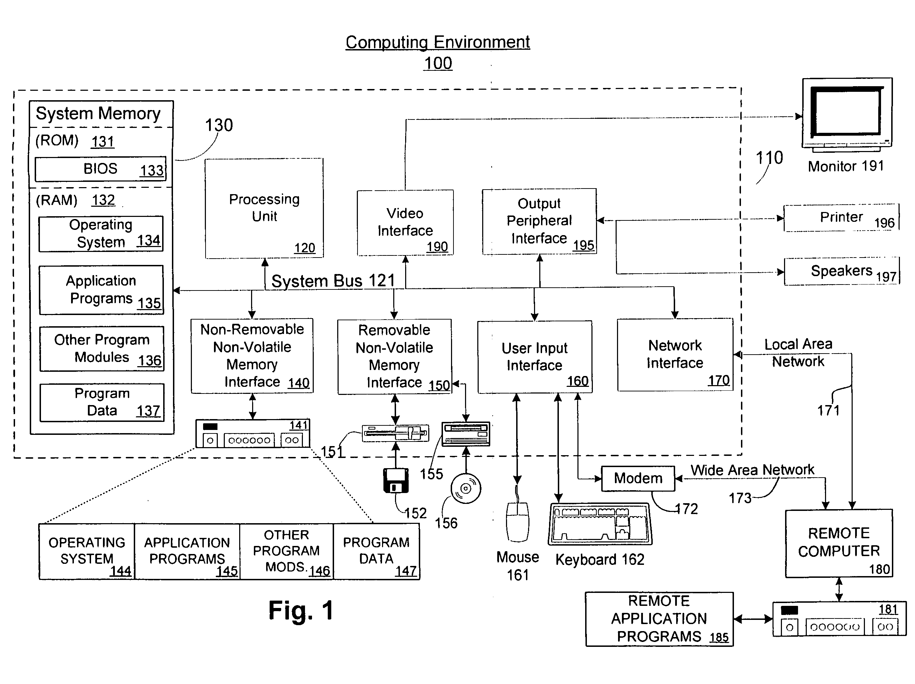

Figure 1 illustrates an example of a suitable computing system environment 100 in which the invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network or other data transmission medium. In a distributed computing environment, program modules and other data may be located in both local and remote computer storage media including memory storage devices.

With reference to Figure 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and non-volatile media, removable and non-removable media. By way of example, and not limitation, computer readable media may comprise computer storage media and communication media. Computer storage media includes both volatile and non-volatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or non-volatile memory such as ROM 131 and RAM 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, Figure 1 illustrates operating system 134, application programs 135, other program modules 136, and program data 137.

The computer 110 may also include other removable/non-removable, volatile/non-volatile computer storage media. By way of example only, Figure 1 illustrates a hard disk drive 140 that reads from or writes to non-removable, non-volatile magnetic media, a magnetic disk drive 151 that reads from or writes to a removable, non-volatile magnetic disk 152, and an optical disk drive 155 that reads from or writes to a removable, non-volatile optical disk 156, such as a CD-ROM or other optical media. Other removable/non-removable, volatile/non-volatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media, discussed above and illustrated in Figure 1, provide storage of computer readable instructions, data structures, program modules and other data for the computer 110. In Figure 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in Figure 1. The logical connections depicted include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, Figure 1 illustrates remote application programs 185 as residing on memory device 181. It will be appreciated that the network connections shown are exemplary and other means of establishing a communications link between the computers may be used.

### Exemplary Distributed Computing Frameworks Or Architectures

Various distributed computing frameworks have been and are being developed in light of the convergence of personal computing and the Internet. Individuals and business users alike are provided with a seamlessly interoperable and web-enabled interface for applications and computing devices, making computing activities increasingly web browser or network-oriented.

For example, MICROSOFT®'s .NET platform includes servers, building-block services, such as web-based data storage, and downloadable device software. Generally speaking, the .NET platform provides (1) the ability to make the entire range of computing devices work together and to have user information automatically updated and synchronized on all of them, (2) increased interactive capability for web sites, enabled by greater use of XML rather than HTML, (3) online services that feature customized access and delivery of products and services to the user from a central starting point for the management of various applications, such as e-mail, for example, or software, such as Office .NET, (4) centralized data storage, which will increase efficiency and ease of access to information, as well as synchronization of information among users and devices, (5) the ability to integrate various communications media, such as e-mail, faxes, and telephones, (6) for developers, the ability to create reusable modules, thereby increasing productivity and reducing the number of programming errors, and (7) many other cross-platform integration features as well.

While exemplary embodiments herein are described in connection with software residing on a computing device, one or more portions of the invention may also be implemented via an operating system, API, or a "middle man" object between a coprocessor and requesting object, such that services may be performed by, supported in, or accessed via all of .NET's languages and services, and in other distributed computing frameworks as well.

### Exemplary Embodiments

A data-driven subscription contains the information used to perform a data-driven delivery. The subscription contains a delivery query that when executed retrieves a number of entries. Each entry defines a recipient, and identifies a set of parameter values used to customize the report sent to the recipient and to customize the delivery extension (distribution channel) used to deliver the report to the recipient. The term data-driven subscription as used herein refers to a subscription where the list of recipients is determined at runtime (i.e., dynamically) and for which the delivered report is customized for each recipient.

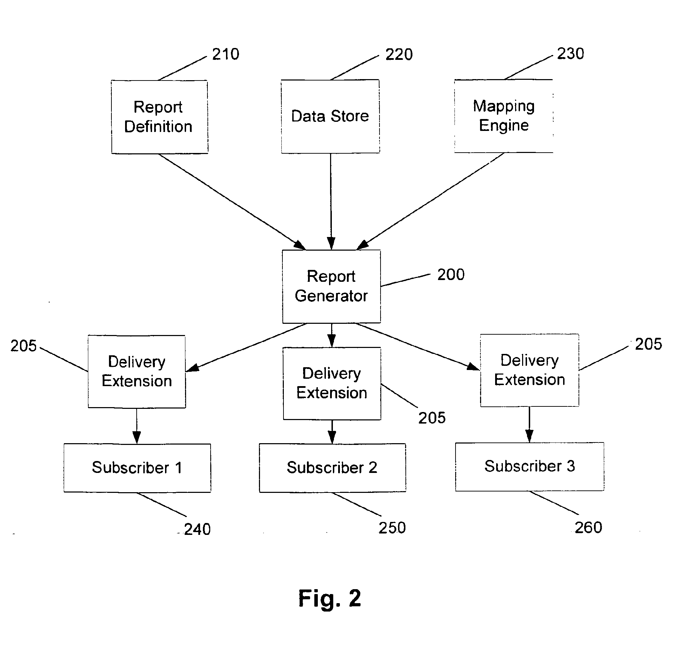

As shown in Figure 2, the definition 210 of the report (i.e., a specification of the data contained in the report and the arrangement of data in the report) is provided to a report generator 200. The report generator also has access to a data store 220 and a mapping engine 230. The report definition 210 is independent of the rendering format. However, the report may be formatted differently depending on the distribution channel (delivery extension 205) used (e.g., a report sent to a pager may be differently formatted from the same report sent to a print server for printing).

Data which can be parameterized and used in custom report generation is previously created and stored in the data store 220 for subsequent use. Data that can be parameterized includes, for example, file name, account number, region, time span, department number, etc.

The mapping engine 230 can provide a mapping between what information should be sent and where it should be sent. Each potential recipient has the distribution channel specified along with the format (e.g., word processing document by email, pager text by pager, hard copy by printer, etc.). The mapping engine 230 is a central mechanism that tells where to send the information, what information to send, and what channel should be used to send it (e.g., email, file shares, web servers, etc.). Content and distribution information are thus combined into the same process. The information is then collected and distributed.

In particular, parameters (e.g., budget report for first quarter of the fiscal year) are specified, along with the recipients (e.g., every manager). A report is then generated or otherwise retrieved or collected by a report generator or server 200. The report is then sent to the defined recipients or subscribers 240, 250, 260 by way of the defined distribution channels (e.g., email, pager, print server, instant messenger).

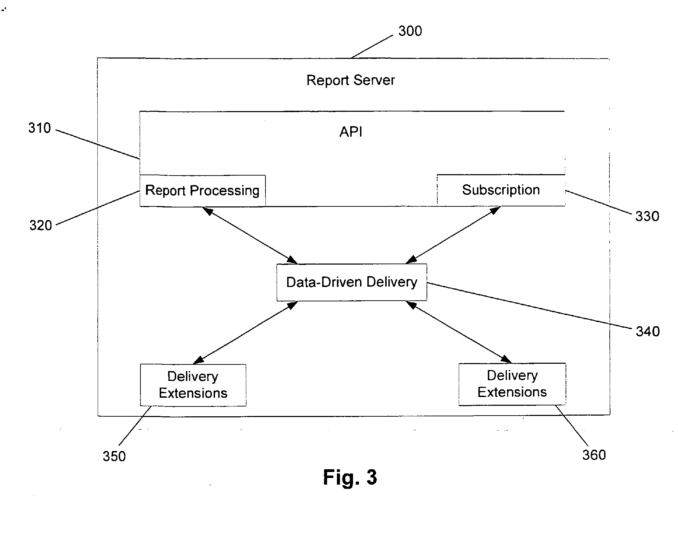

Figure 3 is a block diagram of an exemplary report server in accordance with the present invention. The report server 300 is preferably a network service (e.g., a Web service) that exposes an application programming interface (API) 310 to publish, manage, execute, render and deliver reports. The API 310 includes such features as, for example, naming, scheduling, searching, and security. The API 310 also includes report processing 320 and subscription 330. Data-driven subscriptions plays a role in this architecture because it enables the report server 300 to distribute reports to a large audience both within and outside of the organization, thus extending the value of the server. This is accomplished by leveraging a data processing architecture to execute delivery queries, the report processing component to customize a report for the recipient's needs, and the delivery extension architecture to perform deliveries.

The data-driven delivery 340 leverages the report processing component 320, the subscription 330, and the delivery extensions 350, 360. The report processing 320 generates the customized report responsive to the parameters associated with the recipients in the subscription 330. The delivery extensions 350, 360 are retrieved based on the recipients in the subscription 330. The data-driven delivery 340 then distributes the report to the proper recipients by the associated distribution channel.

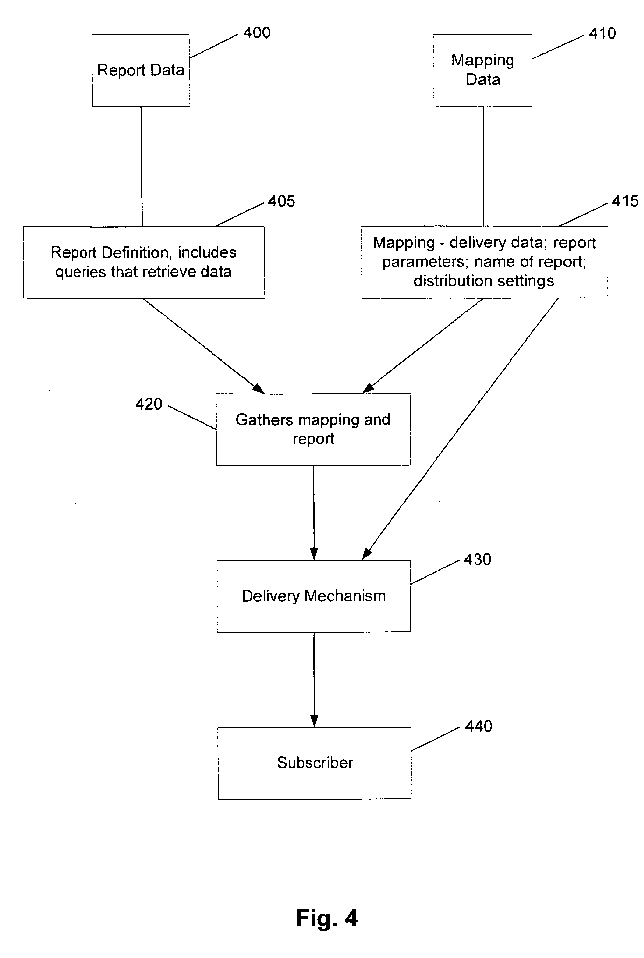

Figure 4 is a flow diagram of exemplary data-driven subscription in accordance with the present invention. A report definition 405 (such as the report definition 210 in Figure 2) has access to stored data 400 that can be used in generating a report. A mapping 415 has access to mapping data 410 which determines what data should be retrieved for a particular report, and the distribution settings, as well as other data, such as the delivery data and the name of the report, for example. The report definition and mapping are collected 420 along with a delivery mechanism 430. The report is generated and then delivered to the subscriber 440 using the appropriate distribution channel.

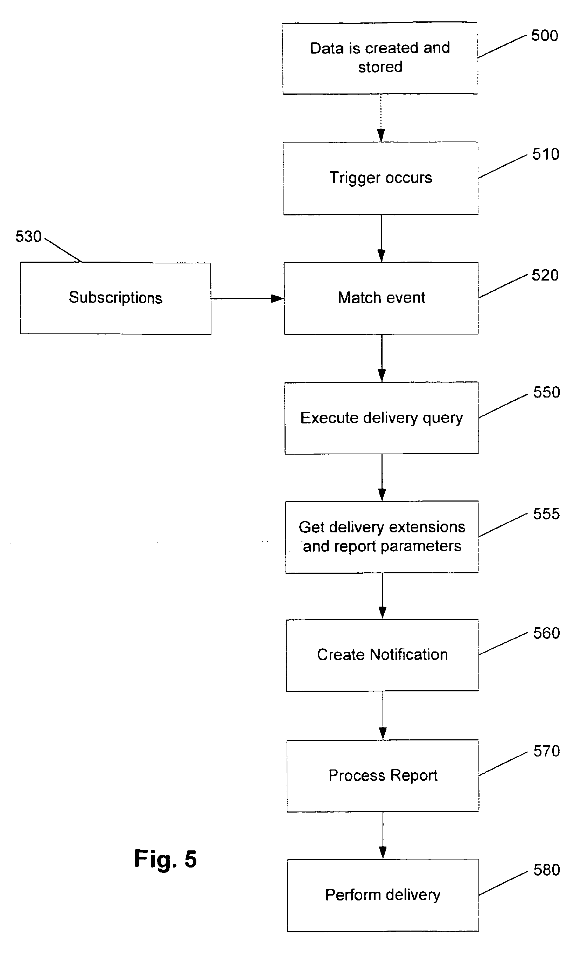

Figure 5 is a flowchart of an exemplary method of data-driven subscription in accordance with the present invention. At step 500, data that can be parameterized is created and stored. At some point thereafter, at step 510, an event trigger occurs. The trigger can be based on a schedule or other events. The subscriptions 530 are matched to the event at step 520.

The delivery query is executed at step 550. According to an embodiment, each row in the result set contains a delivery address to which a delivery is sent as well as a set of fields that are used to drive report parameter values and delivery extension settings. The delivery extensions for the recipients are then used at step 555 along with the parameters for generating the custom report using the data from step 500. The parameters retrieved by the delivery query are mapped to available report parameters and delivery extension settings.

At step 560, a notification for each recipient is created using the delivery extension settings returned by the recipient query and placed in a notification queue. The report is thereafter processed at step 570. At step 580, each notification is passed to the appropriate delivery extension, which executes or otherwise generates the report using the previously specified report parameters and sends the report to the recipient specified in the notification, using the specified distribution channel. Optionally, the delivery extension subscription status is updated and any errors are logged.

An exemplary scenario is one in which a report is to be distributed to all sales representatives for a company. In such a scenario, assume that a manager has authored a monthly synopsis report and wants to distribute it to all sales representatives in the company. The manager defines a data-driven delivery list address query that looks in the employee database for all sales representatives' email addresses and configures the report server to deliver the report by email to each of the addresses returned.

Another exemplary scenario is one in which a paycheck report is distributed to all current employees. Assume a payroll application embeds an exemplary report server, and that numerous users have requested to be notified when pay is deposited in their bank accounts. As part of the payroll system, a pay summary report is built that takes an employee number as a parameter. A data-driven subscription is defined that provides an email address and an employee number for each employee and specifies that the report should be delivered by email. The data-driven subscription is specified to be triggered every Friday at 5 a.m., an hour after the payments are made to employee accounts.

A further exemplary scenario is one in which data-driven deliveries are distributed using multiple delivery extensions. It is contemplated that the report can be sent to multiple delivery extensions for a single user responsive to a single query. The dataset returned by the query includes multiple delivery extensions. When the associated subscription is processed, one notification is generated for each delivery extension in the dataset. Assume that every Monday a stock broker sends a weekly preview report by email to its customers providing information on any scheduled announcements in the upcoming week and advice on how the news might affect each customer's portfolio. Additionally, customers can opt for the broker to page them when the report is ready. Using an exemplary report server, the broker creates a data-driven subscription to the weekly preview report specifying both email and paging information and schedules it to be delivered every Monday at 4:00 a.m.

When a user creates a new data-driven subscription or edits an existing data-driven subscription, the following data can be entered, for example, as shown in Table 1.

**TABLE 1**

| **Name** | **Description** |
|---|---|
| Description | A text description of the subscription. |
| Method of notification | Provides a list of installed delivery extensions on the report server. The user selects one of the delivery extensions. |
| Delivery Query Data Source | Connection information for the data source that will be used for this subscription query. |
| Delivery Query | The text of the query that, when executed, retrieves the set of recipients and for each recipient, the set of parameter values used to customize the report sent to the recipient and to customize the delivery extension (distribution channel) used to deliver the report to the recipient. |
| Delivery Settings | Values for delivery extension settings can be set to either a static value or to the name of a field that is returned from the delivery query. When the subscription is triggered, values returned by the delivery query are substituted anywhere a delivery extension setting is set to the specified field name. |
| Report Parameter Values | Values for report parameters can be set to either a static value or the name of a field that is returned from the delivery query. When the subscription is triggered, values returned by the delivery query are substituted anywhere a report parameter is set to the specified field name. |
| Subscription Trigger | Specifies a set of options that define when the data-driven subscription is triggered. |

An exemplary report server includes a programmatic interface for creating subscriptions. Table 2 shows exemplary arguments that may be provided to this programmatic interface.

**TABLE 2**

| **Argument** | **Description** |
|---|---|
| Report | Name of the report which will be delivered. |
| ExtensionSettings | Extension settings that provide the extension used for this subscription and settings for the extension. |
| DataSettings | Data Settings element that provides settings used to retrieve data from a delivery query. |
| Description | A description of how reports are to be delivered and in what format. Preferably, human readable, to be displayed in a user interface. |
| EventType | The type of event that triggers the subscription. |
| MatchData | Data associated with the specified EventType used to match the subscription with a fired event. |
| Parameters | Specifies the parameters for the report and their values. |

As mentioned above, while exemplary embodiments of the present invention have been described in connection with various computing devices and network architectures, the underlying concepts may be applied to any computing device or system.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that may utilize the creation and/or implementation of domain-specific programming models aspects of the present invention, e.g., through the use of a data processing API or the like, are preferably implemented in a high level procedural or object oriented programming language to communicate with a computer system. However, the program(s) can be implemented in assembly or machine language, if desired. In any case, the language may be a compiled or interpreted language, and combined with hardware implementations.

The methods and apparatus of the present invention may also be practiced via communications embodied in the form of program code that is transmitted over some transmission medium, such as over electrical wiring or cabling, through fiber optics, or via any other form of transmission, wherein, when the program code is received and loaded into and executed by a machine, such as an EPROM, a gate array, a programmable logic device (PLD), a client computer, or the like, the machine becomes an apparatus for practicing the invention. When implemented on a general-purpose processor, the program code combines with the processor to provide a unique apparatus that operates to invoke the functionality of the present invention. Additionally, any storage techniques used in connection with the present invention may invariably be a combination of hardware and software.

While the present invention has been described in connection with the preferred embodiments of the various figures, it is to be understood that other similar embodiments may be used or modifications and additions may be made to the described embodiments for performing the same function of the present invention without deviating therefrom. Therefore, the present invention should not be limited to any single embodiment, but rather should be construed in breadth and scope in accordance with the appended claims.

## Claims

1. A method of generating a report and distributing the report to a plurality of recipients, comprising:
receiving data comprising a plurality of component data;
retrieving a dynamic list of the recipients and a corresponding distribution channel for each recipient;
determining which component data to send to which of the recipients on the list;
generating a report comprising the determined component data; and
distributing the report to each of the determined recipients via the corresponding distribution channel.

2. The method of claim 1, further comprising determining a time or a trigger to send the report to each of the recipients, and wherein distributing the report comprises distributing the report at the time or responsive to the trigger.

3. The method of claim 1, wherein determining which component data to send to the recipients comprises receiving a mapping between the component data and the recipients.

4. The method of claim 1, wherein determining which component data to send to the recipients comprises identifying a set of parameter values and parameterizing the received data.

5. The method of claim 1, further comprising receiving a query, wherein determining which component data to send to the recipients is responsive to the query.

6. The method of claim 1, further comprising receiving at least one of report parameters and delivery extension settings for each recipient and customizing the report for each recipient based on the at least one of the report parameters and the delivery extension settings.

7. A computer-readable medium having stored thereon computer-executable instructions for performing a method of generating a report and distributing the report to a plurality of recipients, comprising:
receiving data comprising a plurality of component data;
retrieving a dynamic list of the recipients and a corresponding distribution channel for each recipient;
determining which component data to send to which of the recipients on the list;
generating a report comprising the determined component data; and
distributing the report to each of the determined recipients via the corresponding distribution channel.

8. The computer-readable medium of claim 7, further comprising computer-executable instructions for determining a time or a trigger to send the report to each of the recipients, and wherein distributing the report comprises distributing the report at the time or responsive to the trigger.

9. The computer-readable medium of claim 7, wherein determining which component data to send to the recipients comprises receiving a mapping between the component data and the recipients.

10. The computer-readable medium of claim 7, wherein determining which component data to send to the recipients comprises identifying a set of parameter values and parameterizing the received data.

11. The computer-readable medium of claim 7, further comprising computer-executable instructions for receiving a query, wherein determining which component data to send to the recipients is responsive to the query.

12. The computer-readable medium of claim 7, further comprising computer-executable instructions for receiving at least one of report parameters and delivery extension settings for each recipient and customizing the report for each recipient based on the at least one of the report parameters and the delivery extension settings.

13. A system for generating a report and distributing the report to a plurality of recipients, comprising:
a storage device that stores data comprising a plurality of component data; and
a report server that maintains a list of the recipients and a corresponding distribution channel for each recipient, determines which component data to send to which of the recipients on the list, generates a report comprising the determined component data, and distributes the report to each of the determined recipients via the corresponding distribution channel.

14. The system of claim 13, wherein the report server comprises a report generator that accesses the storage device and a mapping engine to determine which component data to send to the recipients.

15. The system of claim 13, wherein the report server distributes the report to each of the determined recipients via the corresponding distribution channel responsive to a time or a trigger.

16. The system of claim 13, wherein the report server identifies a set of parameter values and parameterizes the stored data responsive to the parameter values to determine which component data to send to which of the recipients on the list.

17. The system of claim 13, wherein the report server generates the report responsive to a report definition.

18. The system of claim 17, wherein the report definition is independent of the distribution channel.

19. The system of claim 13, wherein the report server is adapted to receive a query, and to determine which component data to send responsive to the query.

20. The system of claim 13, wherein the report server receives at least one of report parameters and delivery extension settings for each recipient and customizes the report for each recipient based on the at least one of the report parameters and the delivery extension settings.
